# EUROPEAN PATENT SPECIFICATION

(11) **EP 2 795 957 B1**
(45) Date of publication and mention of the grant of the patent: **05.10.2016**
(21) Application number: 12823261.8
(22) Date of filing: 19.12.2012
(51) Int. Cl.: H04W 28/20

(54) **BANDWIDTH MANAGEMENT IN A HOME NETWORK**
BANDBREITENVERWALTUNG IN EINEM HEIMNETZWERK
GESTION DE LA BANDE PASSANTE SUR UN RÉSEAU DOMESTIQUE

(30) Priority: 19.12.2011 US 201113330070
(43) Date of publication of application: 29.10.2014
(73) Proprietor: Telefonaktiebolaget LM Ericsson (publ), 164 83 Stockholm (SE)
(72) Inventor: GODIN, André, Laval, Quebec H7R 5X2 (CA); GAVITA, Edoardo, Laval, Quebec H7M 4N4 (CA); KATYAL, Ganish, Ville Saint Laurent, H4L 4R1 (CA)
(74) Representative: Röthinger, Rainer
(86) International application number: PCT/IB2012/057495
(87) International publication number: WO 2013/093810

(56) References cited:
- WO-A1-2008/023957
- WO-A1-2008/060071
- US-A1- 2006 268 738
- US-A1- 2010 027 494
- OKSMAN V ET AL: "G.hn: The new ITU-T home networking standard", IEEE COMMUNICATIONS MAGAZINE, IEEE SERVICE CENTER, PISCATAWAY, US, vol. 47, no. 10, 1 October 2009 (2009-10-01), pages 138-145, XP011283328, ISSN: 0163-6804, DOI: 10.1109/MCOM.2009.5273821

## Description

### TECHNICAL FIELD

The present invention generally relates to managing bandwidth in a home network, and particularly relates to managing that bandwidth by coordinating the self-imposed cooperation amongst clients in the home network for sharing different network connections.

### BACKGROUND

A home network is a local area network (LAN) that interconnects multiple clients in a residential setting via different network connections, which may be wired, wireless, or a combination thereof. The home network may also connect the clients to an external network, such as the Internet, via an external network connection. When multiple clients co-exist in this residential setting, as they often do, the clients compete for the use of bandwidth on these network connections.

Known approaches to managing the use of bandwidth by clients in a home network generally employ a bandwidth enforcer centrally located in an external network (e.g., a service provider's network). The bandwidth enforcer remotely imposes limitations on the bandwidth that may be used on the external network connection by clients competing for that bandwidth. If a client attempts to use more bandwidth than allowed by the bandwidth enforcer, the enforcer either completely blocks the client's attempt or at least throttles the bandwidth used by the client.

These known approaches prove inflexible because they closely integrate the bandwidth enforcer with the external network, use proprietary protocols, and rely on external imposition and enforcement of strict bandwidth limitations. The approaches also prove inefficient due to excessive control signaling between the home network and the external network.

Further prior art is known from US 2006/268738 A1, US 2010/027494 A1, WO 2008/060071 A1, WO 2008/023957 A1 and OKSMAN V et al "G.hn: The new ITU-T home networking standard" (IEEE COMMUNICATIONS MAGAZINE, vol. 47, no. 10, pages 138-145, 2009-10-01).

### SUMMARY

Embodiments herein include a method and apparatus for managing the use of bandwidth by clients in a home network. Rather than being located in some external network, the method and apparatus are advantageously located in the home network itself. And, rather than forcefully imposing limitations on the use of bandwidth by competing clients, the method and apparatus assume a more neutral role as a coordinator between cooperating clients. As coordinator, the method and apparatus coordinate the use of bandwidth by clients that voluntarily cooperate with one another to share bandwidth. This coordination advantageously treats different network connections as independent pools of usable bandwidth, in order to promote non-conflicting uses of bandwidth that maximize connection utilization.

More particularly, processing performed by a coordinator herein may be implemented by one of the clients themselves or by a home gateway. In either case, such processing includes maintaining information (e.g., in memory) for the network connections that logically represents the different connections as independent pools of usable bandwidth. This bandwidth information also indicates the amount of bandwidth available for use from each pool. Processing further entails receiving advertisements from clients advertising tentative use of a specified amount of bandwidth drawn from each of one or more pools. Responsive to these advertisements, processing includes notifying clients regarding whether or not, according to the bandwidth information, the one or more pools from which their respective advertised uses would draw from each have the specified amount of bandwidth available. Finally, processing entails independently updating each pool to indicate that any bandwidth notified as being available from that pool is now unavailable.

Corresponding processing performed by any given client entails sending an advertisement to the coordinator that advertises tentative use of a specified amount of bandwidth drawn from each of one or more pools. Responsive to sending this advertisement, processing then includes receiving notification from the coordinator regarding whether or not the specified amount of bandwidth is available in each of those one or more pools. Finally, processing entails selectively engaging in the advertised use depending on the received notification.

When engaging in an advertised use the client voluntarily adheres to a self-imposed bandwidth use limitation corresponding to the advertised bandwidth, in order to cooperatively share any bandwidth remaining in the advertised pools with other clients. The client may, for instance, voluntarily establish a bearer, a channel, or some other connection pipe on the associated connections that has a maximum bandwidth corresponding to the advertised bandwidth. The client may do so even though the client is inherently capable of and would not otherwise be prevented from establishing a bearer with a greater maximum bandwidth.

The embodiments may be analogously extended to bandwidth pools within other bandwidth pools (i.e., sub-pools). Specifically, in some embodiments, the coordinator represents at least one pool as being divided into different sub-pools of bandwidth that are respectively usable by different groups of clients. By sub-dividing a bandwidth pool in this way, the coordinator may provide different rudimentary qualities of service to different groups of clients.

Regardless, when the coordinator role is assumed by the home gateway, coordination proves quite reliable in the sense that the home gateway always remains connected to the network. This contrasts with at least some clients that may occasionally or periodically leave and re-join the network. Especially in this case, therefore, at least some embodiments dynamically adjust which client device assumes the role of coordinator based on device availability.

Of course, the present invention is not limited to the above features and advantages. Indeed, those skilled in the art will recognize additional features and advantages upon reading the following detailed description, and upon viewing the accompanying drawings.

### BRIEF DESCRIPTION OF THE DRAWINGS

Figure 1 is a block diagram of a home network that includes one or more nodes configured according to one or more embodiments.
Figure 2 is a logic flow diagram of a method implemented by a node in a home network for coordinating the self-imposed cooperation amongst clients for sharing different network connections, according to one or more embodiments.
Figure 3 is a logic flow diagram of a method implemented by a client in a home network for self-imposed cooperation with other clients for sharing different network connections, according to one or more embodiments.
Figure 4 illustrates an example of a pool of bandwidth being divided into different sub-pools of bandwidth according to one or more embodiments.
Figure 5 is a block diagram of a node configured according to one or more embodiments.
Figure 6 is a block diagram of a controller in a node for coordinating the self-imposed cooperation amongst clients for sharing different network connections.
Figure 7 is a block diagram of a controller in a client for self-imposed cooperation with other clients for sharing different network connections.

### DETAILED DESCRIPTION

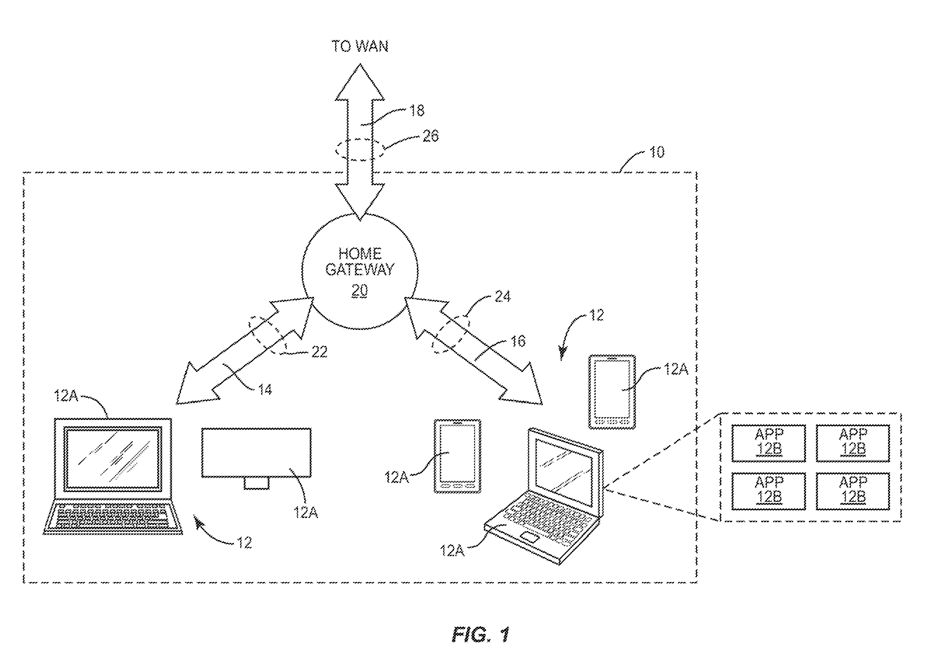

Figure 1 depicts a simplified embodiment of a home network 10. The home network 10 interconnects multiple clients 12 in a residential setting via different network connections, which may be wired, wireless, or a combination thereof. As shown, for instance, the home network 10 interconnects clients 12 via a wired network connection 14 as well as a wireless network connection 16. The home network 10 may also connect the clients 12 to an external network, such as a private or public wide area network (WAN), via an external network connection 18.

In this simplified embodiment, a home gateway 20 provides the home network functionality by serving the multiple roles of a network modem, firewall, router, wireless access point, and the like. These different roles may nonetheless be provided by physically separate nodes in other embodiments.

Similarly, a client 12 as used herein may generally refer to a physical device 12A as a whole, such as a computing device, a multimedia device (e.g., a set-top-box), a mobile terminal, a home appliance, or any other such device communicatively connected to the home network 10. A client 12 may also more particularly refer to a software application 12B running on such a physical device.

Regardless of these details, multiple clients 12 co-exist in the home network 10, while each of the network connections 14, 16, 18 has only a certain amount of bandwidth. Rather than competing for unrestrained use of this bandwidth, the clients 12 herein voluntarily cooperate with one another to share bandwidth and thus in a sense abide by self-imposed bandwidth use limitations. A node within the home network 10, whether one of the clients 12 or the home gateway 20, neutrally coordinates this cooperation amongst clients 12 by assuming a coordinator role. In this role, the coordinator advantageously treats the different network connections 14, 16, 18 as independent pools 22, 24, 26 of usable bandwidth, in order to promote non-conflicting uses of bandwidth that maximize connection utilization.

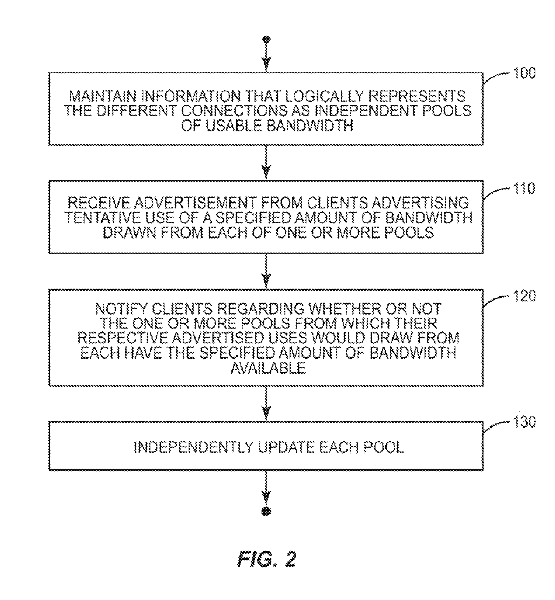

Figure 2 illustrates processing performed by a coordinator in this regard. As shown in Figure 2, coordinator processing includes maintaining information (e.g., in memory) for the network connections 14, 16, 18 that logically represents the different connections 14, 16, 18 as independent pools 22, 24, 26 of usable bandwidth (Block 100). This bandwidth information also indicates the amount of bandwidth available for use from each pool. Processing further entails receiving advertisements from clients 12 advertising tentative use of a specified amount of bandwidth drawn from each of one or more pools 14, 16, 18 (Block 110). Responsive to these advertisements, processing includes notifying clients 12 regarding whether or not, according to the bandwidth information, the one or more pools 14, 16, 18 from which their respective advertised uses would draw from each have the specified amount of bandwidth available (Block 120). Finally, processing entails independently updating each pool 14, 16, 18 to indicate that any bandwidth notified as being available from that pool is now unavailable (Block 130).

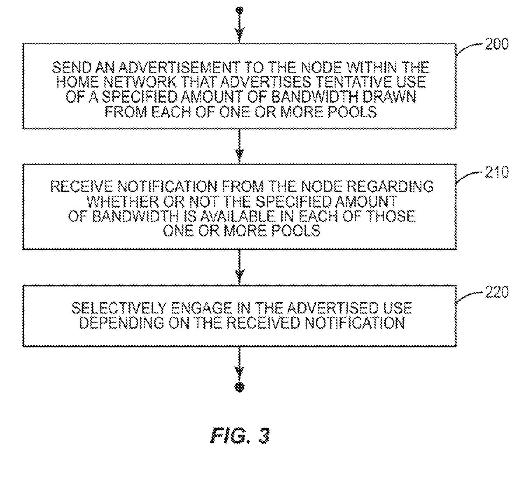

Figure 3 illustrates corresponding processing performed by any given client 12. As shown in Figure 3, client processing entails sending an advertisement to the coordinator that advertises tentative use of a specified amount of bandwidth drawn from each of one or more pools 14, 16, 18 (Block 200). Responsive to sending this advertisement, processing then includes receiving notification from the coordinator regarding whether or not the specified amount of bandwidth is available in each of those one or more pools (Block 210). Finally, processing entails selectively engaging in the advertised use depending on the received notification (Block 220).

A client's selective engagement in this regard involves refraining from engaging in the advertised use if the received notification indicates that any of the advertised pools lack the specified amount of bandwidth. Otherwise, if the received notification indicates that the specified amount of bandwidth is available in each of the advertised pools, the client 12 proceeds to engage in the advertised use. In doing so, the client 12 voluntarily adheres to a self-imposed bandwidth use limitation corresponding to the advertised bandwidth, in order to cooperatively share any bandwidth remaining in the advertised pools with other clients.

The client 12 may, for instance, voluntarily establish a bearer, a channel, or some other connection pipe on the associated connections that has a maximum bandwidth corresponding to the advertised bandwidth. The client 12 may do so even though the client 12 is inherently capable of and would not otherwise be prevented from establishing a bearer with a greater maximum bandwidth. Indeed, the coordinator herein wields no enforcement authority with respect to actual bandwidth usage and would not prohibit or prevent the client 12 from using more bandwidth than advertised. Rather, the coordinator relies on the presumption that, since the clients 12 operate within the home network environment, they will voluntarily cooperate.

Consider a simple example that helps illustrate the above processing. In this example, the coordinator maintains information that logically represents the wired connection 14 as a pool 22 of bandwidth that is nominally filled to 100 Mbps, the wireless connection 16 as a pool 24 of bandwidth that is nominally filled to 54 Mbps, and the external network connection 18 as a pool 26 of bandwidth that is nominally filled to 10 Mbps. At a particular time in the example, however, two clients 12 are using the full capacity of the wired connection 14 (e.g., by transferring files to each other at 100 Mbps), meaning that the information maintained by the coordinator indicates that none of the bandwidth in pool 22 is currently available. With the wired connection 14 utilized to capacity, the coordinator receives an advertisement from another client 12 advertising that it intends to use both the wireless connection 16 and the external network connection 18 (e.g., to bridge to the Internet). This advertisement specifies that such tentative use would draw 7 Mbps from each of pools 24 and 26.

Responsive to receiving such an advertisement, the coordinator inspects the information it has maintained for the wireless connection 16 and the external connection 18. Because the coordinator treats pools for the different connections independently, the coordinator determines based on the inspection that each of the pools 24 and 26 corresponding to those connections 16, 18 has at least 7 Mbps available for use (even though the pool 22 corresponding to the wired connection has no bandwidth available for use). The coordinator notifies the client 12 of this by sending a notification message to the client 12. Based simply on the assumption that the client 12 will actually engage in this use responsive to receiving the notification message, as opposed to actually monitoring or otherwise detecting such use, the coordinator independently updates pools 24 and 26 (i.e., without updating pool 22) to reflect that 7 Mbps has been drawn from them and is no longer available. If, for instance, the entire capacity of the connections 16, 18 was available prior to the client's advertised use, the coordinator would update the information to reflect that only 47 Mbps is available from pool 24 and that only 3 Mbps is available from pool 26.

When the client 12 then receives the notification message, the client 12 inspects the message to determine whether or not the 7 Mbps that it advertised for tentative use is actually available from pools 24 and 26. If the message indicates that 7 Mbps is not available, the client 12 refrains from the advertised use. Conversely, if the message indicates that 7 Mbps is indeed available, the client 12 engages in the advertised use. In doing so, the client 12 voluntarily adheres to a self-imposed bandwidth use limitation of 7 Mbps, in order to cooperatively share any bandwidth remaining in pools 24 and 26 with other clients. The client 12 may, for instance, voluntarily establish a bearer, a channel, or some other connection pipe on the connections 16, 18 that has a maximum bandwidth of 7 Mbps.

Note that an advertisement's indication of which pools a tentative use would draw from may be either explicit or implicit. In some embodiments, for instance, the coordinator inspects or otherwise recognizes an explicit parameter in an advertisement that conveys one or more pool identifiers associated with the advertised use. In other embodiments, the explicit parameter conveys one or more connection identifiers that the coordinator maps to associated pools.

In still other embodiments, however, the advertisement only implicitly conveys to which one or more pools the advertised use relates, without regard to any explicit parameter. One such implicit indicator, for instance, may relate to the network connection over which the coordinator receives an advertisement. In this case, the coordinator deduces from which one or more pools an advertised use would draw from based at least in part on over which network connection the advertisement was received. For instance, if the coordinator receives an advertisement over the wired connection 14, the coordinator deduces that at least one of the pools to which the advertised use relates is pool 22.

Moreover, while the above embodiments have described an advertisement as advertising a tentative use that would be imminent, an advertisement in at least some embodiments may specify a time period during which the advertised tentative use would occur. This way, provided that the coordinator maintains information indicating the amount of bandwidth available for use from each pool 22, 24, 26 as a function of time, the coordinator may facilitate cooperation amongst clients 12 by maintaining a schedule of advertised bandwidth uses. Indeed, the coordinator may notify clients 12 regarding the availability of bandwidth during time periods specified in respective advertisements from those clients 12, where such time periods may be specified in terms of a start time and an end time, a start time and a duration, or the like. A client 12 may then consider advertised bandwidth as being in a sense reserved for it during the specified time, since the coordinator will update the appropriate pools in its schedule to indicate that such bandwidth will be unavailable to other clients 12 during that time.

In any case, after the coordinator has updated any given pool to indicate that bandwidth is unavailable for use (whether starting imminently for an indefinite amount of time, or during a certain period of time), the coordinator may update that pool in an analogous manner when bandwidth becomes available for use again. In some embodiments, for example, the coordinator detects when bandwidth from each pool is no longer being used, and correspondingly updates each pool to reflect the availability of that bandwidth.

In at least one embodiment, the coordinator detects that bandwidth from one or more pools is no longer being used by inspecting a bandwidth release notification received from a client 12. Such notification may explicitly or implicitly indicate an amount of bandwidth that it is no longer using, as well as one or more pools from which that bandwidth was drawn. In some embodiments, implicit indication of the bandwidth amount and/or associated pools may be provided by a parameter that maps the release notification to the corresponding notification previously sent to indicate bandwidth availability.

For example, the coordinator may assign a transaction identifier to each notification that it sends indicating bandwidth availability, where that identifier is associated with the amount of bandwidth indicated as being available and the pools in which the bandwidth is available. Then, responsive to receiving a release notification that includes a transaction identifier, the coordinator correspondingly releases the amount of bandwidth associated with that identifier from the pools associated with the identifier.

Alternatively, based on the coordinator notifying clients 12 of available bandwidth, the coordinator may track how much bandwidth each client 12 draws from which pools. Responsive to receiving a release notification that includes a client identifier, the coordinator releases the bandwidth drawn by the client 12.

In still other embodiments, the coordinator detects that bandwidth from one or more pools is no longer being used by detecting that a time period specified in the advertisement for that use has expired. For advertised uses that do not specify a time period, and instead advertise use for an indefinite amount of time, the coordinator in some embodiments may detect that a predefined default time period for that use has expired.

In yet other embodiments, the coordinator periodically sends a message to any clients 12 using bandwidth with the expectation that those clients 12 are to send a response. Such message may comprise a ping message, a heartbeat message, or the like. Regardless, if the coordinator does not receive a response from a given client 12 (e.g., after a defined period of time has passed since sending the message to that client 12), the coordinator assumes that the client 12 has ceased using the bandwidth. That is, the coordinator assumes that a client 12 which does not respond to the coordinator's message has likely powered down or failed, and is unable to itself indicate that it is no longer using the bandwidth.

While the above embodiments have been described generally with respect to bandwidth pools 22, 24, 26 that directly correspond to respective network connections 14, 16, 18, the embodiments may be analogously extended to bandwidth pools within other bandwidth pools (i.e., sub-pools). Specifically, in some embodiments, the coordinator represents at least one pool as being divided into different sub-pools of bandwidth that are respectively usable by different groups of clients 12. Advertised uses may therefore explicitly specify pools from which they draw bandwidth with a broad pool granularity or a more specific sub-pool granularity. Or, similar to above embodiments, the coordinator may deduce from which one or more sub-pools any given advertised use would draw from based at least in part on to which group the advertising client belongs. In any case, by sub-dividing a bandwidth pool in this way, the coordinator may provide different rudimentary qualities of service to different groups of clients 12.

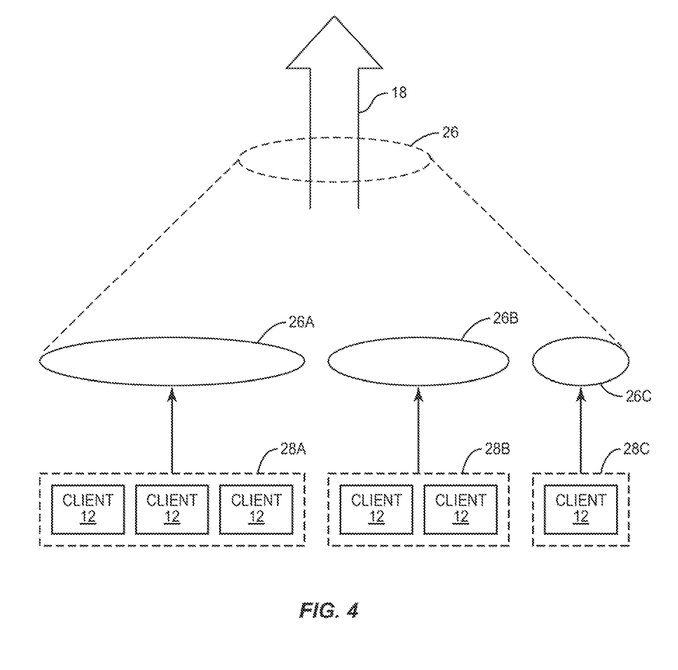

Figure 4 illustrates an example of these sub-pool embodiments. As shown in Figure 4, the coordinator maintains information that represents the bandwidth pool 26 for the external network connection 18 as being divided into different sub-pools 26A-C of bandwidth. Each of these different sub-pools 26A, 26B, and 26C is respectively usable by different groups 28A, 28B, and 28C of clients 12. These different groups 28A, 28B, and 28C may be provisioned in the coordinator as logically corresponding to different types of clients 12, different services executed by clients 12, different owners or users of clients 12, or the like.

As one example, sub-pool 26A may be usable by a group 28A of clients 12 that execute a peer-to-peer service, such as file sharing, while sub-pool 26B is usable by a group 28B of clients 12 that execute a multimedia streaming service and sub-pool 26C is usable by a group 26C of clients 12 that execute any other types of services. In this case, the division of pool 26 into different sub-pools 26A, 26B, and 26C extends client cooperation to the service-level, to thereby ensure that each different service has at least a certain amount of bandwidth available for use. Other cases may extend client cooperation to the user-level, such as where sub-pool 26A is usable by one user, sub-pool 26B is usable by another user, and so on.

Regardless, when the coordinator role is assumed by the home gateway 20, coordination proves quite reliable in the sense that the home gateway 20 always remains connected to the network 10. This contrasts with at least some clients 12 that may occasionally or periodically leave and re-join the network 10, e.g., computing devices that are occasionally re-started, mobile devices that often leave and return to the residential premises, etc. Especially in this case, therefore, at least some embodiments dynamically adjust which client device 12A assumes the role of coordinator based on device availability.

More particularly, in one embodiment, the client device 12A serving as coordinator periodically notifies other client devices 12A that it is still able to serve as coordinator. In this regard, the coordinator may periodically broadcast a message to other client devices 12A, such as a ping message, a heartbeat message, or the like. The other client devices 12A may thus detect if and when the coordinator has become unavailable based on detecting if and when the coordinator fails to provide notice that it is still able to serve as coordinator.

Regardless, when a client device 12A not serving as coordinator detects that another device 12A is no longer able to serve as coordinator, the client device 12A broadcasts a proposal to other client devices 12A proposing that it assumes the role of coordinator. If the other client devices 12A consent to this (e.g., unanimously, by majority, or the like), the device 12A dynamically assumes the role of coordinator. Such may entail sending a request to the other client devices 12A for information indicating the amount of bandwidth they are currently using (or have advertised for future use) and to which pools that use relates. Based on responses to this request, the new coordinator may recreate the bandwidth information maintained by the previous coordinator and seamlessly proceed to coordinate cooperation amongst the clients 12.

Those skilled in the art will readily appreciate that no particular technology is required for managing the bandwidth pools described above. As one example, though, the coordinator may maintain information that represents each pool as having a number of tokens corresponding to the nominal amount of bandwidth available for use from that pool. The number of tokens within any given pool thus proportionally represents the amount of bandwidth available in that pool. In notifying a client regarding whether or not the one or more pools from which an advertised use would draw from each have a specified amount of bandwidth, the coordinator proportionally issues tokens from those pools as bandwidth is available and notifies the client of that issuance (e.g., by sending a representation of those tokens to the client). If bandwidth is not available, by contrast, the coordinator informs the client that no tokens have been issued to it.

Those skilled in the art will also understand that the coordinator may provide a user interface, e.g., to a home network administrator, for provisioning or otherwise con-figuring one or more parameters for the functionality described above. Such parameters may relate to, for instance, the size of any sub-pools 26A 26B, 26C, the groupings 28A, 28B, 28C of different clients 12, or the like. Moreover, such user interface may provide reports regarding current and/or past bandwidth usage in the home network 10, as tracked by the coordinator (e.g., in statistical terms or on a use-by-use basis). These reports may be purely informational or may actually assist a network administrator identify any needed modifications to the parameters. In any case, with the coordinator advantageously located in the home network 10, the user interface may be an opensource web graphical user interface, an application on a mobile terminal, or any other interface configured to connect to the coordinator.

Those skilled in the art will further appreciate that no particular communication technology is required for communications on the different network connections. In some embodiments, nevertheless, any wired connection 14 in the home network 10 may operate according to Ethernet standards, while any wireless connection 16 operates according to the IEEE 802.11 family of standards. Of course, the connection 16 may alternatively or additionally employ other short-range wireless access technologies, such as Near Field Communication (NFC) or BLUETOOTH. Regardless of such particular standards, though, the protocols used by the coordinator and clients 12 for the cooperation above may advantageously be simple protocols, like multicast and/ or HTTP within the home network 10.

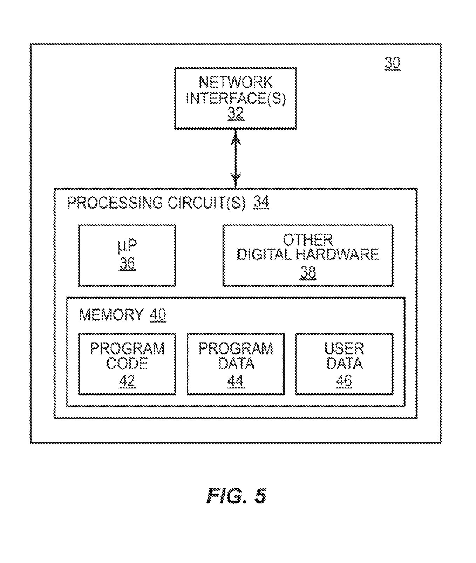

An apparatus configured to carry out the techniques described above is illustrated in Figure 5, where such apparatus 30 may generally be a client device 12A or a home gateway 20. Broadly described, the apparatus 30 includes one or more network interfaces 32 and one or more processing circuits 34. The one or more network interfaces 32 may include a wired connection interface and/or a wireless connection interface. The one or more network interfaces 32 may also include an external network connection interface where the apparatus 30 is the home gateway 20. In any case, such interfaces 32 are configured to send and receive communication signals within the home network 10, and to convert any received signals into digital samples for processing by the one or more processing circuits 34. The one or more processing circuits 34 extract data from signals received via the interface(s) 32 and generate information for transmission via the interface(s) 32. In this regard, the interface(s) 32 use known signal processing techniques, typically according to one or more communications standards, and are configured to format digital data and condition a communication signal, from that data, for transmission over one or more of the network connections 14, 16, 18.

The one or more processing circuits 34 in particular comprise one or several microprocessors 36, digital signal processors, and the like, as well as other digital hardware 38 and memory circuit 40. Memory 40, which may comprise one or several types of memory such as read-only memory (ROM), random-access memory, cache memory, flash memory devices, optical storage devices, etc., stores program code 42 for executing one or more data communications protocols and for carrying out one or more of the techniques described herein. Memory 40 further stores program data 44, user data 46, and various parameters and/or other program data for controlling the operation of the apparatus 30.

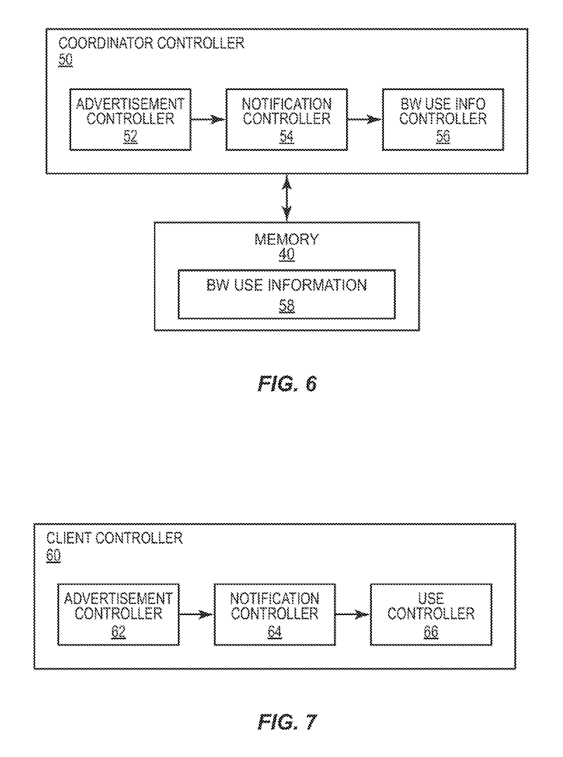

Of course, not all of the steps of the techniques described herein are necessarily performed in a single microprocessor or even in a single module. Thus, Figure 6 specifically presents a view of a coordinator node, which may be a client device 12A or the home gateway 20, configured to carry out the method shown in Figure 2. This coordinator node may have a physical configuration that corresponds directly to processing circuits 34, for example, or may be embodied in two or more modules or units. In either case, the coordinator node includes a coordinator controller 50 that is configured with modules or sub-circuits to carry out operations in accordance with the method in Figure 2, in conjunction with memory 40. These units are pictured in Figure 6 as an advertisement controller 52, a notification controller 54, and a bandwidth use information controller 56.

The bandwidth use information controller 56 is configured to maintain the above-described bandwidth use information 58 in memory 40 for the network connections 14, 16, 18. Again, this information 58 logically represents the different connections 14, 16, 18 as independent pools 22, 24, 26 of usable bandwidth and indicates the amount of bandwidth available for use from each pool. The advertisement controller 52 is configured to receive advertisements from clients 12 advertising tentative use of a specified amount of bandwidth drawn from each of one or more pools 14, 16, 18. And the notification controller 54 is configured, responsive to the advertisement controller 52 receiving advertisements, to notify clients 12 regarding whether or not, according to the bandwidth use information 58, the one or more pools 14, 16, 18 from which their respective advertised uses would draw from each have the specified amount of bandwidth available. Finally, the bandwidth use information controller 56 is configured to independently update each pool 14, 16, 18 to indicate that any bandwidth notified as being available from that pool is now unavailable.

Figure 7, by contrast, presents a more generalized view of a client 12 configured to carry out the method shown in Figure 3. This client 12 may also have a physical configuration that corresponds directly to processing circuits 34, for example, or may be embodied in two or more modules or units. In either case, the client 12 includes a client controller 60 that is configured with at least one module or sub-circuit to carry out operations in accordance with the method in Figure 3. This at least one unit is pictured in Figure 7 as an advertisement controller 62, a notification controller 64, and a use controller 66.

The advertisement controller 62 is configured to send an advertisement to the coordinator that advertises tentative use of a specified amount of bandwidth drawn from each of one or more pools 14, 16, 18. Responsive to the advertisement controller 62 sending this advertisement, the notification controller 64 is configured to receive notification from the coordinator regarding whether or not the specified amount of bandwidth is available in each of those one or more pools. Finally, the use controller 66 is configured to selectively engage the client 12 in the advertised use depending on the notification received by the notification controller 64.

Those skilled in the art will nonetheless appreciate that the various 'circuits' described may refer to a combination of analog and digital circuits, and/or one or more processors configured with software stored in memory and/or firmware stored in memory that, when executed by the one or more processors, perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

Thus, those skilled in the art will recognize that the present invention may be carried out in other ways than those specifically set forth herein without departing from essential characteristics of the invention. The present embodiments are thus to be considered in all respects as illustrative and not restrictive, and all changes coming within the meaning and equivalency range of the appended claims are intended to be embraced therein.

## Claims

1. A method implemented by a node within a home network (10) for coordinating the self-imposed cooperation amongst clients (12) for sharing different network connections (14, 16, 18), comprising:
- maintaining (100) information (58) for said network connections that logically represents the different network connections as independent pools (22, 24, 26) of usable bandwidth and that indicates the amount of bandwidth available for use from each pool (22, 24, 26);
- receiving (110) advertisements from clients (12) advertising tentative use of a specified amount of bandwidth drawn from each of one or more pools (22, 24, 26);
- notifying (120) clients (12) regarding whether or not, according to said information (58), the one or more pools (22, 24, 26) from which their respective advertised uses would draw from each have the specified amount of bandwidth available; and
- independently updating (130) each pool (22, 24, 26) to indicate that any bandwidth notified as being available from that pool (22, 24, 26) is now unavailable.

2. The method of claim 1, wherein said information (58) represents each pool (22, 24, 26) as having a number of tokens corresponding to the nominal amount of bandwidth available for use from that pool (22, 24, 26), and wherein said notifying comprises proportionally issuing tokens from respective pools (22, 24, 26) to clients (12) advertising uses for which bandwidth is available and informing other clients (12) that no tokens have been issued to them.

3. The method of any of claims 1 or 2, wherein said information (58) indicates the amount of bandwidth available for use from each pool (22, 24, 26) as a function of time, wherein said receiving comprises receiving advertisements that specify a time period during which the advertised tentative use would occur, and wherein said notifying comprises notifying clients (12) regarding the availability of bandwidth during the time period specified in respective advertisements.

4. The method of any of the preceding claims, further comprising deducing from which one or more pools (22, 24, 26) any given advertised use would draw from based at least in part on over which network connection (14, 16, 18) the respective advertisement was received.

5. The method of any of the preceding claims, wherein said information (58) represents at least one pool (22, 24, 26) as being divided into different sub-pools of bandwidth that are respectively usable by different groups of clients (12), wherein receiving an advertisement from clients (12) for tentative use of bandwidth from a divided pool (22, 24, 26) comprises receiving an advertisement for tentative use of one or more sub-pools, and wherein said notifying comprises notifying those clients (12) regarding whether or not the one or more sub-pools from which their respective advertised uses would draw from each have the specified amount of bandwidth available; and, optionally,
wherein the method further comprises deducing from which one or more sub-pools any given advertised use of the divided pool (22, 24, 26) would draw from based at least in part on to which group the respective client belongs.

6. The method of any of the preceding claims, further comprising:
- detecting when bandwidth from each pool (22, 24, 26) is no longer being used; and
- responsive to said detection, independently updating each pool (22, 24, 26) to reflect the availability of that bandwidth.

7. The method of any of the preceding claims, wherein any given client comprises either a client device (12A) or a client application (12B) running on a client device (12A).

8. The method of any of the preceding claims, wherein the method is implemented by a node in the home network (10) serving as coordinator, wherein said node is either:
- a home gateway (20) for the home network (10); or
- a first one of a plurality of client devices (12A).

9. The method of any of the preceding claims, wherein the method is implemented by a first one of a plurality of client devices (12A) in the home network (10) serving as coordinator, and further comprises:
- detecting that a second client device (12A) is no longer able to serve as coordinator;
- responsive to said detection, broadcasting a proposal to other client devices (12A) in the home network (10) proposing that the first client device (12A) assumes the role of coordinator; and
- dynamically assuming the role of coordinator upon unanimous consent among the other client devices (12A);
and optionally further comprises periodically notifying other client devices (12A) in the home network (10) that the first client device (12A) is still able to serve as coordinator.

10. A node within a home network (10) configured to coordinate the self-imposed cooperation amongst clients (12) for sharing different network connections (14, 16, 18), comprising one or more network interfaces (32) for communicatively coupling the node to the home network (10) and one or more processing circuits (34) configured to:
- maintain (100) information (58) for said network connections that logically represents the different network connections as independent pools (22, 24, 26) of usable bandwidth and that indicates the amount of bandwidth available for use from each pool (22, 24, 26);
- receive (110) advertisements from clients (12) advertising tentative use of a specified amount of bandwidth drawn from each of one or more pools (22, 24, 26);
- notify (120) clients (12) regarding whether or not, according to said information (58), the one or more pools (22, 24, 26) from which their respective advertised uses would draw from each have the specified amount of bandwidth available; and
- independently update (130) each pool (22, 24, 26) to indicate that any bandwidth notified as being available from that pool (22, 24, 26) is now unavailable.

11. The node of claim 10, wherein said information (58) represents each pool (22, 24, 26) as having a number of tokens corresponding to the nominal amount of bandwidth available for use from that pool (22, 24, 26), and wherein said one or more processing circuits (34) are configured to proportionally issue tokens from respective pools (22, 24, 26) to clients (12) advertising uses for which bandwidth is available and inform other clients (12) that no tokens have been issued to them.

12. The node of any of claims 10 or 11, wherein said information (58) indicates the amount of bandwidth available for use from each pool (22, 24, 26) as a function of time, and wherein the one or more processing circuits (34) are configured to receive advertisements that specify a time period during which the advertised tentative use would occur, and to notify clients (12) regarding the availability of bandwidth during the time period specified in respective advertisements.

13. The node of any of claims 10 to 12, wherein the one or more processing circuits (34) are configured to deduce from which one or more pools (22, 24, 26) any given advertised use would draw from based at least in part on over which network connection (14, 16, 18) the respective advertisement was received.

14. The node of any of claims 10 to 13, wherein said information (58) represents at least one pool (22, 24, 26) as being divided into different sub-pools of bandwidth that are respectively usable by different groups of clients (12), and wherein the one or more processing circuits (34) are configured to receive an advertisement for tentative use of one or more sub-pools of a divided pool (22, 24, 26), and to notify those clients (12) regarding whether or not the one or more sub-pools from which their respective advertised uses would draw from each have the specified amount of bandwidth available; and
wherein, optionally, the one or more processing circuits (34) are configured to deduce from which one or more sub-pools any given advertised use of the divided pool (22, 24, 26) would draw from based at least in part on to which group the respective client belongs.

15. The node of any of claims 10 to 14, wherein the one or more processing circuits (34) are configured to:
- detect when bandwidth from each pool (22, 24, 26) is no longer being used; and
- responsive to said detection, independently update each pool (22, 24, 26) to reflect the availability of that bandwidth.

16. The node of any of claims 10 to 15 , wherein any given client comprises either a client device (12A) or a client application (12B) running on a client device (12A).

17. The node of any of claims 10 to 16, wherein the node is either:
- a home gateway (20) for the home network (10); or
- a first one of a plurality of client devices (12A).

18. The node of any of claims 10 to 17, wherein the node is a first one of a plurality of client devices (12A) in the home network (10) serving as coordinator, and wherein the one or more processing circuits (34) are configured to:
- detect that a second client device (12A) is no longer able to serve as coordinator;
- responsive to said detection, broadcast a proposal to other client devices (12A) in the home network (10) proposing that the first client device (12A) assume the role of coordinator; and
- dynamically assume the role of coordinator upon unanimous consent among the other client devices (12A);
and wherein optionally the one or more processing circuits (34) are configured to periodically notify other client devices (12A) in the home network (10) that the first client device (12A) is still able to serve as coordinator.

19. A method implemented by a client in a home network (10) for self-imposed cooperation with other clients (12) for sharing different network connections (14, 16, 18), wherein the different network connections (14, 16, 18) are represented in the home network (10) as independent pools (22, 24, 26) of usable bandwidth, wherein the method comprises:
- sending (200) an advertisement to a node within the home network (10) that advertises tentative use of a specified amount of bandwidth drawn from each of one or more pools (22, 24, 26);
- receiving (210) notification from the node, responsive to said advertisement, regarding whether or not the specified amount of bandwidth is available in each of those one or more pools (22, 24, 26); and
- selectively engaging (220) in the advertised use depending on the received notification.

## Patentansprüche

1. Verfahren, das von einem Knoten innerhalb eines Heimnetzwerks (10) implementiert wird zur Koordination der selbst auferlegten Kooperation unter Clients (12) zum Teilen verschiedener Netzwerkverbindungen (14, 16, 18), umfassend:
- Verwalten (100) von Informationen (58) für die Netzwerkverbindungen, die die verschiedenen Netzwerkverbindungen als unabhängige Pools (22, 24, 26) benutzbarer Bandbreite logisch darstellen und die die Menge an verfügbarer Bandbreite zur Benutzung von jedem Pool (22, 24, 26) angeben;
- Empfangen (110) von Bekanntmachungen von Clients (12), die eine vorläufige Benutzung einer angegebenen Menge an Bandbreite, die von jedem von einem oder mehreren Pools (22, 24, 26) bezogen wird, bekannt machen;
- Melden (120) den Clients (12), ob gemäß der Informationen (58) der eine oder die mehreren Pools (22, 24, 26), von welchen ihre entsprechenden bekanntgemachten Benutzungen bezogen werden würden, jeweils die angegebene Menge an Bandbreite verfügbar haben oder nicht; und
- unabhängiges Aktualisieren (30) jedes Pools (22, 24, 26), um anzugeben, dass jegliche Bandbreite, die als von diesem Pool (22, 24, 26) verfügbar gemeldet ist, jetzt unverfügbar ist.

2. Verfahren nach Anspruch 1, wobei die Informationen (58) jeden Pool (22, 24, 26) so darstellen, dass dieser eine Anzahl von Tokens entsprechend der nominellen Menge an Bandbreite, die zur Benutzung von diesem Pool (22, 24, 26) verfügbar ist, besitzt, und wobei das Melden ein proportionales Ausgeben von Tokens von jeweiligen Pools (22, 24, 26) an Clients (12) umfasst, die Benutzungen, für die Brandbreite verfügbar ist, bekanntmachen, und ein Informieren anderer Clients (12), dass an sie keine Tokens ausgegeben worden sind.

3. Verfahren nach Anspruch 1 oder 2, wobei die Informationen (58) die Menge an zur Benutzung verfügbarer Bandbreite von jedem Pool (22, 24, 26) als eine Funktion der Zeit angeben, wobei das Empfangen ein Empfangen von Bekanntmachungen, die einen Zeitraum angeben, in welchem die bekanntgemachte vorläufige Benutzung stattfinden würde, umfasst, und wobei das Melden ein Melden den Clients (12) der Verfügbarkeit von Bandbreite während des in jeweiligen Bekanntmachungen angegebenen Zeitraums umfasst.

4. Verfahren nach einem der vorhergehenden Ansprüche, weiter umfassend ein Ableiten, von welchem einen oder welchen mehreren Pools (22, 24, 26) eine gegebene bekanntgemachte Benutzung bezogen werden würde, basierend zumindest teilweise darauf, über welche Netzwerkverbindung (14, 16, 18) die jeweilige Bekanntmachung empfangen wurde.

5. Verfahren nach einem der vorhergehenden Ansprüche, wobei die Informationen (58) zumindest einen Pool (22, 24, 26) als unterteilt in verschiedene Sub-Pools von Bandbreite, die jeweils von verschiedenen Gruppen von Clients (12) benutzbar sind, darstellen, wobei das Empfangen einer Bekanntmachung von Clients (12) für eine vorläufige Benutzung von Bandbreite von einem unterteilten Pool (22, 24, 26) ein Empfangen einer Bekanntmachung für eine vorläufige Benutzung eines oder mehrerer Sub-Pools umfasst, und wobei das Melden ein Melden diesen Clients (12), ob der eine oder die mehreren Sub-Pools, von welchen ihre jeweiligen bekanntgemachten Benutzungen bezogen werden würden, jeweils die angegebene Menge an verfügbarer Bandbreite aufweisen oder nicht, umfasst; und, als Option,
wobei das Verfahren weiter umfasst ein Ableiten, von welchen einen oder mehreren Sub-Pools eine gegebene bekanntgemachte Benutzung des unterteilten Pools (22, 24, 26) bezogen werden würde, basierend zumindest teilweise darauf, zu welcher Gruppe der jeweilige Client zugehört.

6. Verfahren nach einem der vorhergehenden Ansprüche, weiter umfassend:
- Feststellen, wann von jedem Pool (22, 24, 26) Bandbreite nicht länger benutzt wird; und
- als Reaktion auf das Feststellen, unabhängiges Aktualisieren jedes Pools (22, 24, 26), um die Verfügbarkeit dieser Bandbreite widerzuspiegeln.

7. Verfahren nach einem der vorhergehenden Ansprüche, wobei ein gegebener Client entweder ein Client-Gerät (12A) oder eine Client-Anwendung (12B), ausgeführt auf einem Client-Gerät (12A), umfasst.

8. Verfahren nach einem der vorhergehenden Ansprüche, wobei das Verfahren von einem als Koordinator dienenden Knoten in dem Heimnetzwerk (10) implementiert wird, wobei der Knoten entweder:
- ein Home-Gateway (20) für das Heimnetzwerk (10) ist; oder
- ein erstes von einer Vielzahl von Client-Geräten (12A) ist.

9. Verfahren nach einem der vorhergehenden Ansprüche, wobei das Verfahren von einem als Koordinator dienenden ersten von einer Vielzahl von Client-Geräten (12A) in dem Heimnetzwerk (10) implementiert wird und weiter umfasst:
Feststellen, dass ein zweites Client-Gerät (12A) nicht länger imstande ist, als Koordinator zu dienen;
Als Reaktion auf das Feststellen, Rundsenden eines Vorschlags an andere Client-Geräte (12A) in dem Heimnetzwerk (10), vorschlagend, dass das erste Client-Gerät (12A) die Rolle des Koordinators übernimmt; und
dynamisches Übernehmen der Rolle des Koordinators auf eine einstimmige Zustimmung unter den anderen Client-Geräten (12A) hin;
und, als Option,
weiter umfassend ein regelmäßiges Melden anderen Client-Geräten (12A) in dem Heimnetzwerk (10), dass das erste Client-Gerät (12A) noch imstande ist, als Koordinator zu dienen.

10. Knoten innerhalb eines Heimnetzwerks (10), ausgebildet zum Koordinieren der selbst auferlegten Zusammenarbeit unter Clients (12) für ein Teilen verschiedener Netzwerkverbindungen (14, 16, 18), umfassend eine oder mehrere Netzwerkschnittstellen (32) für ein kommunikatives Koppeln des Knotens an das Heimnetzwerk (10) und einen oder mehrere Verarbeitungsschaltkreise (34), ausgebildet zum:
Verwalten (100) von Informationen (58) für die Netzwerkverbindungen, die die verschiedenen Netzwerkverbindungen als unabhängige Pools (22, 24, 26) benutzbarer Bandbreite logisch darstellen und die die Menge an verfügbarer Bandbreite zur Benutzung von jedem Pool (22, 24, 26) angeben;
Empfangen (110) von Bekanntmachungen von Clients (12), die eine vorläufige Benutzung einer angegebenen Menge an Bandbreite, die von jedem von einem oder mehreren Pools (22, 24, 26) bezogen wird, bekannt machen;
Melden (120) den Clients (12), ob gemäß der Informationen (58) der eine oder die mehreren Pools (22, 24, 26), von welchen ihre entsprechenden bekanntgemachten Benutzungen bezogen werden würden, jeweils die angegebene Menge an Bandbreite verfügbar haben oder nicht; und
unabhängiges Aktualisieren (130) jedes Pools (22, 24, 26), um anzugeben dass jegliche Bandbreite, die als von diesem Pool (22, 24, 26) verfügbar gemeldet ist, jetzt unverfügbar ist.

11. Knoten nach Anspruch 10, wobei die Informationen (58) jeden Pool (22, 24, 26) so darstellen, dass dieser eine Anzahl von Tokens entsprechend der nominellen Menge an Bandbreite, die zur Benutzung von diesem Pool (22, 24, 26) verfügbar ist, besitzt, und wobei der eine oder die mehreren Verarbeitungsschaltkreise (34) ausgebildet sind zum proportionalen Ausgeben von Tokens von jeweiligen Pools (22, 24, 26) an Clients (12), die Benutzungen, für die Bandbreite verfügbar ist, bekanntmachen und zum Informieren anderer Clients (12), dass an sie keine Tokens ausgegeben worden sind.

12. Knoten nach einem der Ansprüche 10 oder 11, wobei die Informationen (58) die Menge an zur Benutzung verfügbaren Bandbreite von jedem Pool (22, 24, 26) als eine Funktion der Zeit angeben und wobei der eine oder die mehreren Verarbeitungsschaltkreise (34) ausgebildet sind zum Empfangen von Bekanntmachungen, die einen Zeitraum angeben, in welchem die bekanntgemachte vorläufige Benutzung stattfinden würde und zum Melden den Clients (12) der Verfügbarkeit von Bandbreite während des in jeweiligen Bekanntmachungen angegebenen Zeitraums.

13. Knoten nach einem der Ansprüche 10 bis 12, wobei der eine oder die mehreren Verarbeitungsschaltkreise (34) ausgebildet sind zum Ableiten, von welchem einen oder welchen mehreren Pools (22, 24, 26) eine gegebene bekanntgemachte Benutzung bezogen werden würde, basierend zumindest teilweise darauf, über welche Netzwerkverbindung (14, 16, 18) die jeweilige Bekanntmachung empfangen wurde.

14. Knoten nach einem der Ansprüche 10 bis 13, wobei die Informationen (58) zumindest einen Pool (22, 24, 26) als unterteilt in verschiedene Sub-Pools von Bandbreite, die jeweils von verschiedenen Gruppen von Clients (12) benutzbar sind, darstellen, und wobei der eine oder die mehreren Verarbeitungsschaltkreise (34) ausgebildet sind zum Empfangen einer Bekanntmachung für eine vorläufige Benutzung von einem oder mehreren Sub-Pools eines unterteilten Pools (22, 24, 26) und zum Melden diesen Clients (12), ob der eine oder mehrere Sub-Pools, von denen ihre jeweiligen bekanntgemachten Benutzungen bezogen werden würden, jeweils die angegebene Menge an verfügbarer Bandbreite aufweisen oder nicht; und
wobei, als Option, der eine oder die mehreren Verarbeitungsschaltkreise (34) ausgebildet sind zum Ableiten, von welchem einen oder welchen mehreren Sub-Pools eine gegebene bekanntgemachte Benutzung des unterteilten Pools (22, 24, 26) bezogen werden würde, basierend zumindest teilweise darauf, zu welcher Gruppe der jeweilige Client gehört.

15. Knoten nach einem der Ansprüche 10 bis 14, wobei der eine oder die mehreren Verarbeitungsschaltkreise (34) ausgebildet sind zum:
Feststellen, wann von jedem Pool (22, 24, 26) Bandbreite nicht länger benutzt wird; und
als Reaktion auf das Feststellen, unabhängiges Aktualisieren jedes Pools (22, 24, 26), um die Verfügbarkeit dieser Bandbreite widerzuspiegeln.

16. Knoten nach einem der Ansprüche 10 bis 15, wobei ein gegebener Client entweder ein Client-Gerät (12A) oder eine Client-Anwendung (12B), ausgeführt auf einem Client-Gerät (12A), umfasst.

17. Knoten nach einem der Ansprüche 10 bis 16, wobei der Knoten entweder:
ein Home-Gateway (20) für das Heimnetzwerk (10) ist; oder
ein erstes von einer Vielzahl von Client-Geräten (12A) ist.

18. Knoten nach einem der Ansprüche 10 bis 17, wobei der Knoten ein als Koordinator dienendes erstes von einer Vielzahl von Client-Geräten (12A) in dem Heimnetzwerk (10) ist, und wobei der eine oder die mehreren Verarbeitungsschaltkreise (34) ausgebildet sind zum:
Feststellen, dass ein zweites Client-Gerät (12A) nicht länger imstande ist, als Koordinator zu dienen;
als Reaktion auf das Feststellen, ein Senden eines Vorschlags an die anderen Client-Geräte (12A) in dem Heimnetzwerk (10), vorschlagend, dass das erste Client-Gerät (12A) die Rolle des Koordinators übernimmt; und
dynamisches Übernehmen der Rolle des Koordinators auf eine einstimmige Zustimmung unter den anderen Client-Geräten (12A) hin;
und wobei, als Option, der eine oder die mehreren Verarbeitungsschaltkreise (34) ausgebildet sind zum regelmäßigen Melden anderen Client-Geräten (12A) in dem Heimnetzwerk (10), dass das erste Client-Gerät (12A) noch imstande ist, als Koordinator zu dienen.

19. Verfahren implementiert von einem Client in einem Heimnetzwerk (10) für eine selbstauferlegte Kooperation mit anderen Clients (12) zum Teilen verschiedener Netzwerkverbindungen (14, 16, 18), wobei die verschiedenen Netzwerkverbindungen (14, 16, 18) in dem Heimnetzwerk (10) als unabhängige Pools (22, 24, 26) benutzbarer Bandbreite dargestellt werden, wobei das Verfahren umfasst:
Senden (200) einer Bekanntmachung an einen Knoten innerhalb des Heimnetzwerks (10), die eine vorläufige Benutzung einer angegebenen Menge an Bandbreite, die von jedem von einem oder mehreren Pools (22, 24, 26) bezogen wird, bekannt macht;
Empfangen (210) einer Meldung von dem Knoten, als Reaktion auf die Bekanntmachung, ob die angegebene Menge an Bandbreite in jedem von diesem einen oder diesen mehreren Pools (22, 24, 26) verfügbar ist oder nicht; und
selektive Indienstnahme (220) der bekanntgemachten Benutzung abhängig von der empfangenen Meldung.

## Revendications

1. Procédé mis en oeuvre par un noeud dans un réseau domestique (10) pour coordonner la coopération auto-imposée entre des clients (12) pour partager différentes connexions réseau (14, 16, 18), comprenant de :
- maintenir (100) des informations (58) pour lesdites connexions réseau représentant logiquement les différentes connexions réseau en tant que groupes indépendants (22, 24, 26) de largeur de bande utilisable et indiquant la quantité de largeur de bande disponible à utiliser à partir de chaque groupe (22, 24, 26) ;
- recevoir (110) des annonces en provenance de clients (12) annonçant une utilisation provisoire d'une quantité spécifiée de largeur de bande tirée de chacun d'un ou plusieurs groupes (22, 24, 26) ;
- notifier (120), aux clients (12), si l'un ou plusieurs groupes (22, 24, 26), de chacun desquels leurs utilisations annoncées respectives sont tirées, ont ou non la quantité spécifiée de largeur de bande disponible en fonction desdites informations (58) ; et
- mettre à jour (130) chaque groupe (22, 24, 26) indépendamment pour indiquer qu'une largeur de bande notifiée comme étant disponible à partir de ce groupe (22, 24, 26) est désormais indisponible.

2. Procédé selon la revendication 1, dans lequel lesdites informations (58) représentent chaque groupe (22, 24, 26) comme ayant un nombre de jetons correspondant à la quantité nominale de largeur de bande disponible pour une utilisation à partir de ce groupe (22, 24, 26), et dans lequel ladite notification comprend l'émission proportionnelle de jetons à partir de groupes respectifs (22, 24, 26) à l'intention de clients (12) annonçant des utilisations pour lesquelles une largeur de bande est disponible et informant d'autres clients (12) qu'aucun jeton n'a été émis à leur intention.

3. Procédé selon la revendication 1 ou 2, dans lequel lesdites informations (58) indiquent la quantité de largeur de bande disponible pour une utilisation à partir de chaque groupe (22, 24, 26) en fonction du temps, dans lequel ladite réception comprend la réception d'annonces qui spécifient une période de temps au cours de laquelle l'utilisation provisoire annoncée survient, et dans lequel ladite notification comprend la notification, aux clients (12), de la disponibilité de largeur de bande au cours de la période de temps spécifiée dans les annonces respectives.

4. Procédé selon l'une quelconque des revendications précédentes, comprenant en outre la déduction d'un ou plusieurs groupes (22, 24, 26) desquels une utilisation annoncée donnée est tirée sur la base au moins en partie de la connexion réseau (14, 16, 18) sur laquelle l'annonce respective a été reçue.

5. Procédé selon l'une quelconque des revendications précédentes, dans lequel lesdites informations (58) représentent au moins un groupe (22, 24, 26) comme étant divisé en différents sous-groupes de largeur de bande respectivement utilisables par différents groupes de clients (12), dans lequel la réception d'une annonce en provenance de clients (12) pour une utilisation provisoire de largeur de bande à partir d'un groupe divisé (22, 24, 26) comprend la réception d'une annonce pour une utilisation provisoire d'un ou plusieurs sous-groupes, et dans lequel ladite notification comprend la notification, à ces clients (12), si l'un ou plusieurs sous-groupes, de chacun desquels leurs utilisations annoncées respectives sont tirées, ont ou non la quantité spécifiée de largeur de bande ; et, facultativement,
dans lequel le procédé comprend en outre la déduction d'un ou plusieurs sous-groupes desquels une utilisation annoncée donnée du groupe divisé (22, 24, 26) est tirée sur la base au moins en partie du groupe auquel le client respectif appartient.

6. Procédé selon l'une quelconque des revendications précédentes, comprenant en outre de :
- détecter quand une largeur de bande de chaque groupe (22, 24, 26) n'est plus utilisée et
- en réponse à ladite détection, mettre à jour chaque groupe indépendamment (22, 24, 26) pour refléter la disponibilité de cette largeur de bande.

7. Procédé selon l'une quelconque des revendications précédentes, dans lequel un client donné comprend un dispositif client (12A) ou une application client (12B) s'exécutant sur un dispositif client (12A).

8. Procédé selon l'une quelconque des revendications précédentes, dans lequel le procédé est mis en oeuvre par un noeud dans le réseau domestique (10) servant de coordinateur, dans lequel ledit noeud est :
- une passerelle domestique (20) pour le réseau domestique (10) ; ou
- un premier d'une pluralité de dispositifs clients (12A).

9. Procédé selon l'une quelconque des revendications précédentes, dans lequel le procédé est mis en oeuvre par un premier d'une pluralité de dispositifs clients (12A) dans le réseau domestique (10) servant de coordinateur, et comprend en outre de :
- détecter qu'un deuxième dispositif client (12A) n'est plus en mesure de servir de coordinateur ;
- en réponse à ladite détection, diffuser une proposition à d'autres dispositifs clients (12A) dans le réseau domestique (10) proposant que le premier dispositif client (12A) assume le rôle de coordinateur ; et
- prendre en charge de façon dynamique le rôle de coordinateur en cas de consentement unanime des autres dispositifs clients (12A) ;
et, facultativement,
comprend en outre de notifier périodiquement, à d'autres dispositifs clients (12A) dans le réseau domestique (10), que le premier dispositif client (12A) est toujours en mesure de servir de coordinateur.

10. Noeud dans un réseau domestique (10) configuré pour coordonner la coopération auto-imposée entre des clients (12) pour partager différentes connexions réseau (14, 16, 18), comprenant une ou plusieurs interfaces réseau (32) pour coupler, de manière à pouvoir communiquer, le noeud au réseau domestique (10) et un ou plusieurs circuits de traitement (34) configurés pour :
- maintenir (100) des informations (58) pour lesdites connexions réseau représentant logiquement les différentes connexions réseau en tant que groupes indépendants (22, 24, 26) de largeur de bande utilisable et indiquant la quantité de largeur de bande disponible à utiliser à partir de chaque groupe (22, 24, 26) ;
- recevoir (110) des annonces en provenance de clients (12) annonçant une utilisation provisoire d'une quantité spécifiée de largeur de bande tirée de chacun d'un ou plusieurs groupes (22, 24, 26) ;
- notifier (120), aux clients (12), si l'un ou plusieurs groupes (22, 24, 26), de chacun desquels leurs utilisations annoncées respectives sont tirées, ont ou non la quantité spécifiée de largeur de bande disponible en fonction desdites informations (58) ; et
- mettre à jour (130) chaque groupe (22, 24, 26) indépendamment pour indiquer qu'une largeur de bande notifiée comme étant disponible à partir de ce groupe (22, 24, 26) est désormais indisponible.

11. Noeud selon la revendication 10, dans lequel lesdites informations (58) représentent chaque groupe (22, 24, 26) comme ayant un nombre de jetons correspondant à la quantité nominale de largeur de bande disponible pour une utilisation à partir de ce groupe (22, 24, 26), et dans lequel lesdits un ou plusieurs circuits de traitement (34) sont configurés pour émettre de façon proportionnelle des jetons à partir de groupes respectifs (22, 24, 26) à l'intention de clients (12) annonçant des utilisations pour lesquelles une largeur de bande est disponible et informant d'autres clients (12) qu'aucun jeton n'a été émis à leur intention.

12. Noeud selon la revendication 10 ou 11, dans lequel lesdites informations (58) indiquent la quantité de largeur de bande disponible pour une utilisation à partir de chaque groupe (22, 24, 26) en fonction du temps, et dans lequel lesdits un ou plusieurs circuits de traitement (34) sont configurés pour recevoir des annonces qui spécifient une période de temps au cours de laquelle l'utilisation provisoire annoncée survient, et notifier, aux clients (12), la disponibilité de largeur de bande au cours de la période de temps spécifiée dans les annonces respectives.

13. Noeud selon l'une quelconque des revendications 10 à 12, dans lequel l'un ou plusieurs circuits de traitement (34) sont configurés pour déduire d'un ou plusieurs groupes (22, 24, 26) desquels une utilisation annoncée donnée est tirée sur la base au moins en partie de la connexion réseau (14, 16, 18) sur laquelle l'annonce respective a été reçue.

14. Noeud selon l'une quelconque des revendications 10 à 13, dans lequel lesdites informations (58) représentent au moins un groupe (22, 24, 26) comme étant divisé en différents sous-groupes de largeur de bande respectivement utilisables par différents groupes de clients (12), et dans lequel l'un ou plusieurs circuits de traitement (34) sont configurés pour recevoir une annonce pour une utilisation provisoire d'un ou plusieurs sous-groupes d'un groupe divisé (22, 24, 26), et notifier, à ces clients (12), si l'un ou plusieurs sous-groupes, de chacun desquels leurs utilisations annoncées respectives sont tirées, ont ou non la quantité spécifiée de largeur de bande disponible ; et
dans lequel, facultativement, l'un ou plusieurs circuits de traitement (34) sont configurés pour déduire d'un ou plusieurs sous-groupes desquels une utilisation annoncée donnée du groupe divisé (22, 24, 26) est tirée sur la base au moins en partie du groupe auquel le client respectif appartient.

15. Noeud selon l'une quelconque des revendications 10 à 14, dans lequel l'un ou plusieurs circuits de traitement (34) sont configurés pour :
- détecter quand une largeur de bande de chaque groupe (22, 24, 26) n'est plus utilisée ; et
- en réponse à ladite détection, mettre à jour chaque groupe indépendamment (22, 24, 26) pour refléter la disponibilité de cette largeur de bande.

16. Noeud selon l'une quelconque des revendications 10 à 15, dans lequel un client donné comprend un dispositif client (12A) ou une application client (12B) s'exécutant sur un dispositif client (12A).

17. Noeud selon l'une quelconque des revendications 10 à 16, dans lequel le noeud est :
- une passerelle domestique (20) pour le réseau domestique (10) ; ou
- un premier d'une pluralité de dispositifs clients (12A).

18. Noeud selon l'une quelconque des revendications 10 à 17, dans lequel le noeud est un premier d'une pluralité de dispositifs clients (12A) dans le réseau domestique (10) servant de coordinateur, et dans lequel l'un ou plusieurs circuits de traitement (34) sont configurés pour :
- détecter qu'un deuxième dispositif client (12A) n'est plus en mesure de servir de coordinateur ;
- en réponse à ladite détection, diffuser une proposition à d'autres dispositifs clients (12A) dans le réseau domestique (10) proposant que le premier dispositif client (12A) assume le rôle de coordinateur ; et
- prendre en charge de façon dynamique le rôle de coordinateur en cas de consentement unanime des autres dispositifs clients (12A) ;
et, dans lequel, facultativement,
l'un ou plusieurs circuits de traitement (34) sont configurés pour notifier périodiquement, à d'autres dispositifs clients (12A) dans le réseau domestique (10), que le premier dispositif client (12A) est toujours en mesure de servir de coordinateur.

19. Procédé mis en oeuvre par un client dans un réseau domestique (10) pour une coopération auto-imposée avec d'autres clients (12) pour partager différentes connexions réseau (14, 16, 18), dans lequel les différentes connexions réseau (14, 16, 18) sont représentées dans le réseau domestique (10) en tant que groupes indépendants (22, 24, 26) de largeur de bande utilisable, dans lequel le procédé comprend de :
- envoyer (200) une annonce à destination d'un noeud à l'intérieur du réseau domestique (10) qui annonce une utilisation provisoire d'une quantité spécifiée de largeur de bande tirée de chacun d'un ou plusieurs groupes (22, 24, 26)
- recevoir (210) une notification en provenance du noeud, en réponse à ladite annonce, indiquant si la quantité spécifiée de largeur de bande est disponible ou non dans chacun de l'un ou plusieurs groupes (22, 24, 26) et
- participer sélectivement (220) à l'utilisation annoncée en fonction de la notification reçue.
